Europäisches Patentamt

European Patent Office

Office européen des brevets

(11) Veröffentlichungsnummer: **0 293 577 B1**

(19)

(12)

# EUROPÄISCHE PATENTSCHRIFT

(45) Veröffentlichungstag der Patentschrift: **02.01.92**

(21) Anmeldenummer: **88105788.9**

(22) Anmeldetag: **12.04.88**

(51) Int. Cl.5: **F01N 5/04**, F01N 1/10,
F02B 37/00, F02B 37/12

(54) **Abgasanlage mit Schalldämpfer für eine Brennkraftmaschine.**

(30) Priorität: **05.06.87 DE 3718875**

(43) Veröffentlichungstag der Anmeldung:
**07.12.88 Patentblatt 88/49**

(45) Bekanntmachung des Hinweises auf die
Patenterteilung:
**02.01.92 Patentblatt 92/01**

(84) Benannte Vertragsstaaten:
**DE FR GB IT SE**

(56) Entgegenhaltungen:
**EP-A- 0 078 637      FR-A- 2 338 382**
**FR-A- 2 496 758      GB-A- 896 584**
**GB-A- 2 045 862      JP-A-51 088 405**

**PATENT ABSTRACTS OF JAPAN vol. 9, no.**
**142 (M-388)(1865) 18 Juni 1985, & JP-A-60**
**22024 (NISSAN JIDOSHA) 04 Februar 1985,**

(73) Patentinhaber: **Dr.Ing.h.c. F. Porsche Aktien-**
**gesellschaft**
**Porschestrasse 42**
**W-7000 Stuttgart 40(DE)**

(72) Erfinder: **Brüstle, Claus, Dipl.-Ing.**
**Fichtenstrasse 20**
**W-7258 Heimsheim(DE)**
Erfinder: **Bessing, Klaus-Peter, Dipl.-Ing.**
**Buchenweg 6**
**W-7257 Ditzingen 3(DE)**
Erfinder: **Hain, Klaus, Dipl.-Ing.**
**Obere Torstrasse 10**
**W-7250 Leonberg(DE)**

Rank Xerox (UK) Business Services

## Beschreibung

Die Erfindung betrifft eine Abgasanlage mit Schalldämpfer für eine turboaufgeladene Hubkolben-Brennkraftmaschine nach dem Oberbegriff des Anspruchs 1.

Bei einer Abgasanlage, wie sie schematisch in Patentanmeldung P 37 15 061.8 dargestellt ist, werden die Abgase der Hauptleitung und Bypaßleitung in einem Schalldämpfer zusammengeführt, bevor sie ins Freie gelangen. Soll eine mit einer derartigen Abgasanlage ausgestattete Brennkraftmaschine als Flugmotor bei unterschiedlichen geodätischen Höhen optimal arbeiten, so muß die Stärke des Bypaßstroms zum Hauptstrom jeweils ein entsprechendes Verhältnis haben. Die Stelle im Schalldämpfer, an der sich die Abgasströme aus der Hauptleitung und Bypaßleitung vermischen, muß so gestaltet sein, daß eine verlustarme, möglichst geräuscharme Mischung erfolgen kann.

Es ist die Aufgabe der Erfindung, durch eine besondere Gestaltung der Abgasanlage und insbesondere des in sie eingesetzten Schalldämpfers, den Gesamtwirkungsgrad der Brennkraftmaschine zu verbessern und die Abgasgeräusche wirksam zu dämpfen.

Zur Lösung dieser Aufgabe dienen die kennzeichnenden Merkmale des Anspruchs 1. Wenn zu dem Abgasstrom in der Hauptleitung das Abgas der Bypaßleitung durch Ejektorwirkung zugemischt wird, erfolgt die Vermischung im turbulenten Randgebiet des durch den Hauptstrom erzeugten Freistrahls. Die Verwirbelungen und Strömungsverluste lassen sich auf diese Weise klein halten. Der Gesamtwirkungsgrad der Brennkraftmaschine wird erhöht. Zugleich wird durch die Ejektor-Zumischung im Schalldämpfer eine wirksame Dämpfung der Abgasgeräusche erzielt. Hierzu ist die Hauptleitung an einem im Schalldämpfer-Gehäuse befestigten Zentralrohr angeschlossen, von dem das Abgas als Freistrahl austritt. Der Bypaßstrom wird in eine diesen Freistrahl umgebende Blendenöffnung eingeblasen. Zusätzlich wirkt auf ihn der Sog des Freistrahls ein und bewirkt seine Vermischung mit der turbulenten Randzone des Freistrahls, ohne daß hierbei größere Strömungsverluste auftreten.

Zur Druckrückgewinnung und damit zur Steigerung des Wirkungsgrades der Turbine ist das Zentralrohr in Strömungsrichtung diffusorartig erweitert; der Steigungswinkel beträgt ca. 4°. Der Bypaßstrom wird zur Geräuschminderung stark gedrosselt in einen das Zentralrohr umgebenen Ringraum des Schalldämpfer-Gehäuses eingeleitet und gelangt von dort zu der Blendenöffnung.

In einem zum Zentralrohr koaxialen Düsenrohr, das mit einer Vielzahl von radialen Bohrungen versehen ist und mit einer Dämpfungswolle-Packung umgeben ist, wird der Schall des Haupt- und Bypaßstromes gemeinsam gedämpft.

Ein Ausführungsbeispiel der Erfindung ist in der Zeichnung dargestellt und wird nachfolgend erläutert.

Es zeigen:

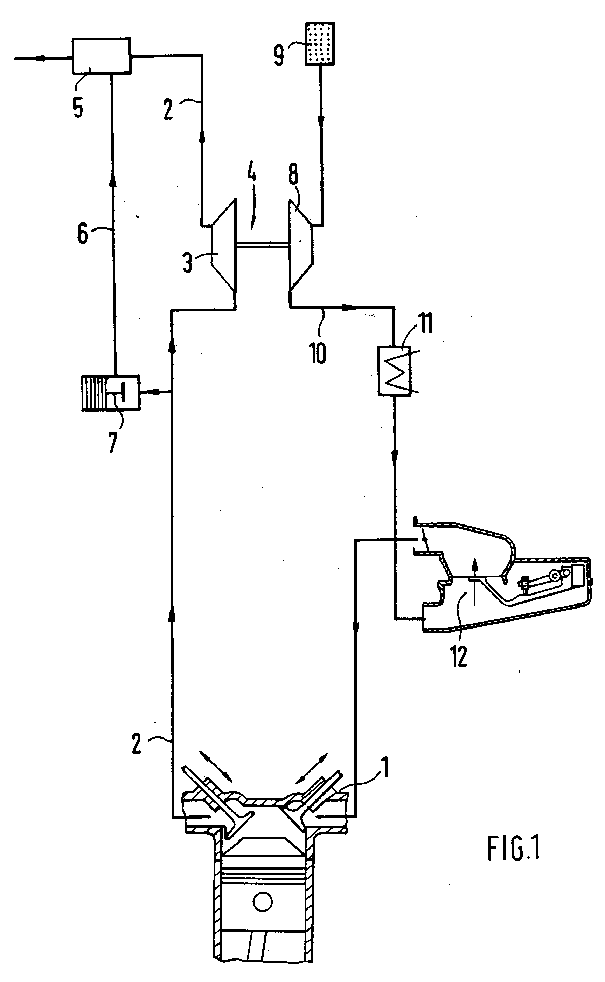

Fig. 1    Schematische Darstellung einer Brennkraftmaschine mit Abgasturbolader,

Fig. 2    Längsschnitt durch einen Abgas-Schalldämpfer,

Fig. 3    Querschnitt des Schalldämpfers nach Linie III-III der Fig. 2.

Vom Zylinderkopf 1 einer Hubkolben-Brennkraftmaschine führt eine Hauptleitung 2 für Abgas zur Turbine 3 eines Turboladers 4 und von dort nach Durchströmen eines Schalldämpfers 5 ins Freie. Parallel zur Turbine 3 liegt eine Bypaßleitung 6, die ebenfalls in den Schalldämpfer 5 einmündet. Im Schalldämpfer 5 vermischt sich der Bypaßstrom mit dem Abgasstrom der Hauptleitung 2. In die Bypaßleitung 6 ist ein Bypaßventil 7 eingesetzt, über das je nach seiner Stellung mehr oder weniger Abgas in den Schalldämpfer 5 gelangt, ohne die Turbine 3 zu beaufschlagen.

Die Turbine 3 treibt einen Verdichter 8, mit dem Frischluft über einen Luftfilter 9 angesaugt und unter Druckerhöhung in eine Ladeluftleitung 10 gefördert wird. Die Ladeluftleitung 10 führt über einen Ladeluftkühler 11 zu einem eine Einspritzanlage steuernden Luftmengenmesser 12 und von dort zum Zylinderkopf 1 der Brennkraftmaschine.

Je höher der Volumenstrom der die Turbine beaufschlagende Abgase ist, umso höher ist die Drehzahl und Leistung des Verdichters. Mit der Erhöhung der Verdichterleistung steigt der Volumenstrom und der Druck der von ihm geförderten Ladeluft. Der erzielbare Ladedruck ist auch davon abhängig, wie hoch der atmosphärische Druck der in den Verdichter eintretenden Frischluft ist. Da dieser Zuführdruck mit zunehmender geodätischer Höhe abnimmt, würde sich auch der Ladedruck entsprechend verringern. Um das zu verhindern, wird das Bypaßventil mit zunehmender geodätischer Höhe, in der sich die Brennkraftmaschine befindet, immer weiter geschlossen. Das Durchsatzverhältnis der Bypaßleitung zur Hauptleitung, das in Meereshöhe ca. 45% zu 55% beträgt, wird bei maximaler geodätischer Höhe auf 0% zu 100% reduziert.

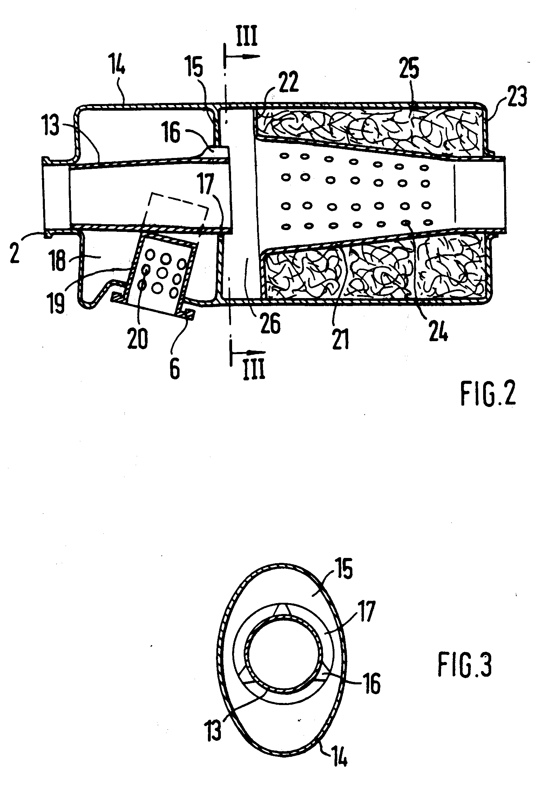

Konstruktive Maßnahmen zur Erhöhung des Turbinenwirkungsgrades und damit des Gesamtwirkungsgrades der Brennkraftmaschine sind an dem in Fig. 2 und Fig. 3 dargestellten Schalldämpfer verwirklicht. Die von der Turbine 3 kommende Hauptleitung 2 ist an ein Zentralrohr 13 angeschlossen, das stirnseitig am Gehäuse 14 des Schalldämpfers 5 befestigt ist. Am anderen Ende ist das Zentralrohr 13 durch eine Trennwand 15 des Gehäuses 14 durchgeführt und in ihr mit drei radial vorstehenden Noppen 16 gehalten. Zwischen den Noppen 16 liegen drei Durchtrittsflächen einer Blendenöffnung 17.

In einen zwischen dem Zentralrohr 13 und der Innenwand des Gehäuses 14 gelegenen Ringraum 18 ragt das Ende 19 der Bypaßleitung 6 hinein und ist im Mantel des Gehäuses 14 befestigt. Stirnseitig ist das Ende 19 verschlossen; am Umfang ist es mit Radialbohrungen 20 versehen, durch die hindurch der Bypaßstrom gedrosselt und schallgedämpft in den Ringraum 18 eintritt.

Koaxial zum Zentralrohr ist ein Düsenrohr 21 im Gehäuse 14 mit einem Kragen 22 befestigt und an der Stirnseite 23 aus dem Gehäuse 14 ins Freie herausgeführt. Das Düsenrohr 21 weist an seinem Mantel ein Muster äquidistanter Bohrungen 24 auf. Der Zwischenraum zwischen dem Düsenrohr und der Innenwand des Gehäuses 14 ist mit Dämpfungswolle 25 ausgefüllt.

Das Abgas tritt aus dem Zentralrohr 13 aus und reißt den aus dem Ringraum 18 über die Blendenöffnung 17 fließenden Bypaßstrom durch Ejektorwirkung mit. In dem zwischen der Trennwand und dem Kragen des Düsenrohrs 21 liegenden ringförmigen Mischraum 26 findet eine Vermischung beider Abgasströme statt. Bei Eintritt dieses gemeinsamen Abgasstromes in das Düsenrohr 21 wird der größte Teil seiner Schallenergie durch die Bohrungen 24 in die Dämpfungswolle 25 eingeleitet und von ihr absorbiert.

**Patentansprüche**

1. Abgasanlage mit Schalldämpfer für eine durch einen Turbolader aufgeladene Kolben-Brennkraftmaschine, wobei die Abgasleitung aus einer zur Turbine des Turboladers führenden Hauptleitung und einer die Turbine umgehenden, durch ein Bypaßventil gesteuerten Bypaßleitung besteht, dadurch gekennzeichnet, daß die Hauptleitung (2) und die Bypaßleitung (6) in das Gehäuses (14) des Schalldämpfers (5) so zueinander ausgerichtet einmünden, daß der Abgasstrom der Hauptleitung (2) auf den Abgasstrom der Bypaßleitung (6) eine Ejektorwirkung ausübt.

2. Abgasanlage mit Schalldämpfer nach Anspruch 1, dadurch gekennzeichnet, daß die Hauptleitung (2) in ein gehäusefestes Zentralrohr (13), die Bypaßleitung (6) in einen zwischen dem Zentralrohr (13) und der Innenwand des Gehäuses (14) gelegenen Ringraum (18) einmündet, der über eine das Austrittsende des Zentralrohres (13) umgebende Blendenöffnung (17) mit einem koaxialen, gehäusefesten Düsenrohr (21) in Verbindung steht.

3. Abgasanlage mit Schalldämpfer nach Anspruch 2, dadurch gekennzeichnet, daß zwischen der Blendenöffnung (17) und dem Düsenrohr (21) ein freier, ringförmiger sich bis zur Innenwand des Gehäuses (14) erstreckender Mischungsraum (26) vorhanden ist.

4. Abgasleitung mit Schalldämpfer nach Anspruch 2, dadurch gekennzeichnet, das Zentralrohr (13) in Strömungsrichtung diffusorartig erweitert.

5. Abgasleitung mit Schalldämpfer nach Anspruch 2, dadurch gekennzeichnet, daß das Düsenrohr (21) ringsrum eine Vielzahl radialer Durchbrüche (24) aufweist, die durch die zwischen dem Düsenrohr (21) und der Innenwand des Gehäuses (14) liegende Dämpfungswolle (25) abgedeckt sind.

6. Abgasleitung mit Schalldämpfer nach Anspruch 5, dadurch gekennzeichnet, daß die Durchbrüche als gleich große, äquidistante Bohrungen (24) ausgeführt sind und sich über den größten Teil der Länge des Düsenrohres erstrecken.

7. Abgasanlage mit Schalldämpfer, nach einem der Ansprüche 1 bis 6, dadurch gekennzeichnet, daß das Gehäuse (14) des Schalldämpfers (5) einen elliptischen Querschnitt aufweist.

8. Abgasanlage mit Schalldämpfer nach Anspruch 1 und 2, dadurch gekennzeichnet, daß das in den Ringraum (18) des Gehäuses (14) hineinragende Ende (19) der Bypaßleitung (6) stirnseitig verschlossen und an seinem Mantel ringsum mit Radialbohrungen (20) versehen ist.

9. Abgasanlage mit Schalldämpfer nach den Ansprüchen 1 bis 8, dadurch gekennzeichnet, daß durch Verschließen des Bypaßventils (7) das Durchsatzverhältnis der Bypaßleitung (6) zur Hauptleitung (2) mit zunehmender geodätischer Höhe der Brennkraftmaschine verringert wird.

**Claims**

1. An exhaust device with a silencer for a reciprocating-piston internal combustion engine supercharged by a turbocharger, the exhaust duct comprising a main duct which leads to the turbine of the turbocharger and a by-pass duct which avoids the turbine and is controlled by a by-pass valve, characterized in that the main duct (2) and the by-pass duct (6) enter the housing (14) of the silencer (5) and are orientated with respect to each other in such a way that the exhaust flow from the main duct (2) exerts an ejector effect upon the exhaust flow from the by-pass duct (6).

2. An exhaust device with a silencer according to Claim 1, characterized in that the main duct (2) opens into a central tube (13) fixed to the housing, and the by-pass duct (6) opens into an annular space (18) lying between the central tube (13) and the inner wall of the housing (14) and connected by way of a diaphragm opening (17) surrounding the outlet end of the central tube (13) to a coaxial jet tube (21) fixed to the housing.

3. An exhaust device with a silencer according to Claim 2, characterized in that a free annular mixing chamber (26) extending as far as the inner wall of the housing (14) is provided between the diaphragm opening (17) and the jet tube (21).

4. An exhaust device with a silencer according to Claim 2, characterized in that the central tube (13) is enlarged in the manner of a diffusor in the flow direction.

5. An exhaust device with a silencer according to Claim 2, characterized in that the jet tube (21) is provided all round with a plurality of radial apertures (24) which are covered by the damping wool (25) lying between the jet tube (21) and the inner wall of the housing (14).

6. An exhaust device with a silencer according to Claim 5, characterized in that the apertures are formed as equidistant bores (24) of equal size and extend over the greater part of the length of the jet tube.

7. An exhaust device with a silencer according to any one of Claims 1 to 6, characterized in that the housing (14) of the silencer (5) has an elliptical cross-section.

8. An exhaust device with a silencer according to Claims 1 and 2, characterized in that the end (19) of the by-pass duct (6) projecting into the annular space (18) of the housing (14) is closed at its end face and is provided with radial bores (20) all round its generated surface.

9. An exhaust device with a silencer according to Claims 1 to 8, characterized in that by closing the by-pass valve (7) the throughput ratio of the bypass duct (6) to the main duct (2) is reduced as the geodetic height of the internal combustion engine increases.

## Revendications

1. Dispositif d'échappement avec silencieux destiné à un moteur à combustion interne à piston alternatif et turbocompresseur, la tuyauterie des gaz d'échappement étant constituée par une tuyauterie principale menant à la turbine du turbocompresseur et par une tuyauterie de dérivation, contournant la turbine, commandée par une soupape de dérivation, caractérisé en ce que la tuyauterie principale (2) et la tuyauterie de dérivation (6) débouchent dans le boîtier (14) du silencieux (5), orientées l'une par rapport à l'autre de telle sorte que le courant des gaz d'échappement de la tuyauterie principale (2) exerce un effet d'éjection sur le courant des gaz d'échappement de la tuyauterie de dérivation (6).

2. Dispositif d'échappement avec silencieux selon la revendication 1, caractérisé en ce que la tuyauterie principale (2) débouche dans un tube central (13) solidaire du boîtier, la tuyauterie de dérivation (6) dans un espace annulaire (18) situé entre le tube central (13) et la paroi intérieure du boîtier (14), lequel espace annulaire communique par une ouverture à diaphragme (17) entourant l'extrémité de sortie du tube central (13), avec un tube à buses (21) coaxial, solidaire du boîtier.

3. Dispositif d'échappement avec silencieux selon la revendication 2, caractérisé en ce qu'il est prévu entre l'ouverture à diaphragme (17) et le tube à buses (21), un compartiment de mélange (26) libre, annulaire, s'étendant jusqu'à la paroi intérieure du boîtier (14).

4. Dispositif d'échappement avec silencieux selon la revendication 2, caractérisé en ce que le tube central (13) s'élargit à la manière d'un diffuseur dans le sens de l'écoulement.

5. Dispositif d'échappement avec silencieux selon la revendication 2, caractérisé en ce que le tube à buses (21) présente tout autour une pluralité d'ajours (24) radiaux qui sont recouverts par la laine d'isolation (25) située entre le tube à buses (21) et la paroi intérieure du boîtier (14).

6. Dispositif d'échappement avec silencieux selon la revendication 5, caractérisé en ce que les ajours sont des trous (24) équidistants, de mêmes dimensions et s'étendent sur la plus grande partie de la longueur du tube à buses.

7. Dispositif d'échappement avec silencieux selon l'une des revendications 1 à 6, caractérisé en ce que le boîtier (14) du silencieux (5) présente une section transversale elliptique.

8. Dispositif d'échappement avec silencieux selon les revendications 1 et 2, caractérisé en ce que l'extrémité (19) de la tuyauterie de dérivation (6), pénétrant dans l'espace annulaire (18) du boîtier (14), est fermée sur sa face frontale et est pourvue sur tout le pourtour de son enveloppe, d'alésages radiaux (20).

9. Dispositif d'échappement avec silencieux selon les revendications 1 à 8, caractérisé en ce qu'en fermant la soupape de dérivation (7), le rapport entre le débit de la tuyauterie de dérivation (6) et celui de la tuyauterie principale (2) diminue en même temps qu'augmente la hauteur géodésique du moteur à combustion interne.

FIG.1

FIG.2

FIG.3